# EUROPEAN PATENT APPLICATION

(11) **EP 4 089 954 A1**
(43) Date of publication of application: **16.11.2022**
(21) Application number: 21200779.3
(22) Date of filing: 04.10.2021
(51) Int. Cl.: H04L 9/08, H04L 9/32, H04W 4/80, H04W 12/069, H04W 12/50, H04W 76/14

(54) **BLUETOOTH PERIPHERAL AND CENTRAL APPARATUSES AND VERIFICATION METHOD**

(30) Priority: 11.05.2021 TW 110116929
(71) Applicant: C&L Consulting Inc., Taipei City 105020 (TW); Columbia AloT Technologies Co., Ltd., New Taipei City 247018 (TW)
(72) Inventor: CHENG, Fu-Chiung, New Taipei City (TW); LIU, Wei-Cheng, 105020 Taipei City (TW); WANG, Dai-Xin, 105020 Taipei City (TW)
(74) Representative: dompatent von Kreisler Selting Werner - Partnerschaft von Patent- und Rechtsanwälten mbB

(57) **Abstract**

A Bluetooth central apparatus encrypts a piece of verification data according to a secret-key system to generate a first encrypted verification parameter, and transmits the first encrypted verification parameter to a Bluetooth peripheral apparatus. The Bluetooth peripheral apparatus decrypts the first encrypted verification parameter according to the secret-key system to obtain a piece of decrypted verification data. The Bluetooth peripheral apparatus also encrypts the piece of decrypted verification data according to the secret-key system to generate a second encrypted verification parameter, and transmits the second encrypted verification parameter to the Bluetooth central apparatus. After that, the Bluetooth central apparatus decrypts the second encrypted verification parameter according to the secret-key system to obtain the piece of decrypted verification data, and verify whether the Bluetooth peripheral apparatus is valid according to the piece of verification data and the piece of decrypted verification data.

## Description

### BACKGROUND

### Field of the Invention

The present disclosure relates to a peripheral apparatus, a central apparatus and a verification method. More specifically, the present disclosure relates to a Bluetooth peripheral apparatus, a Bluetooth central apparatus and a verification method.

### Descriptions of the Related Art

According to the Bluetooth specification, Bluetooth apparatuses include central apparatuses and peripheral apparatuses. A peripheral apparatus may send out an advertising packet, and a nearby central apparatus may transmit a request for connection to the peripheral apparatus after receiving the advertising packet of the peripheral apparatus. If the peripheral apparatus agrees with the request for connection, then the peripheral apparatus establishes a Bluetooth connection with the central apparatus. For the sake of security, the existing Bluetooth specification provides several methods for verifying whether a peripheral apparatus has established a Bluetooth connection with the right central apparatus, and vice versa (i.e., Bluetooth pairing), such as Numeric Comparison, Passkey Entry, and Out-of-Band (OOB). In the method of Numerical Comparison, a set of numbers is displayed on both of the peripheral apparatus and the central apparatus, and the user needs to confirm whether the sets of numbers are consistent for the verification. In the method of Passkey Entry, a set of numbers is displayed on one of the peripheral apparatus and the central apparatus, and the user needs to correctly input the set of numbers into another apparatus for the verification. OOB means other methods, and a common practice is to move the peripheral apparatus and the central apparatus within a distance close enough for the user to do the verification through Near Field Communication (NFC). However, the existing methods of verification usually require the intervention of users, rather than being automatic, and thus they are not suitable for being implemented in the field of Internet of Things (IoT) that involves a large number of apparatuses.

In view of the situation above, there is an urgent need in the art to provide an automatic and safe Bluetooth connection method.

### SUMMARY

In order to solve at least the aforesaid problems, some embodiments of the disclosed invention provide a Bluetooth peripheral apparatus. The Bluetooth peripheral apparatus may comprise a transceiver and a processor electrically connected to the transceiver. The transceiver may be configured to receive a first encrypted verification parameter from a Bluetooth central apparatus. The processor may be configured to: decrypt the first encrypted verification parameter according to a secret-key system to obtain a piece of decrypted verification data; and encrypt the piece of decrypted verification data according to the secret-key system to generate a second encrypted verification parameter. The transceiver may be further configured to transmit the second encrypted verification parameter to the Bluetooth central apparatus so that the Bluetooth central apparatus verifies whether the Bluetooth peripheral apparatus is valid.

In order to solve at least the aforesaid problems, some embodiments of the disclosed invention provide a Bluetooth central apparatus. The Bluetooth central apparatus may comprise a processor and a transceiver electrically connected to the processor. The processor may be configured to encrypt a piece of verification data according to a secret-key system to generate a first encrypted verification parameter. The transceiver may be configured to: transmit the first encrypted verification parameter to a Bluetooth peripheral apparatus; and receive a second encrypted verification parameter from the Bluetooth peripheral apparatus. The processor may be further configured to: decrypt the second encrypted verification parameter according to the secret-key system to obtain a piece of decrypted verification data; and verify whether the Bluetooth peripheral apparatus is valid according to the piece of verification data and the piece of decrypted verification data.

In order to solve at least the aforesaid problems, some embodiments of the disclosed invention provide a verification method. The verification method may be implemented on a Bluetooth peripheral apparatus, and may comprise: receiving a first encrypted verification parameter from a Bluetooth central apparatus; decrypting the first encrypted verification parameter according to a secret-key system to obtain a piece of decrypted verification data; encrypting the piece of decrypted verification data according to the secret-key system to generate a second encrypted verification parameter; and transmitting the second encrypted verification parameter to the Bluetooth central apparatus so that the Bluetooth central apparatus verifies whether the Bluetooth peripheral apparatus is valid.

In order to solve at least the aforesaid problems, some embodiments of the disclosed invention provide a verification method. The verification method may be implemented on a Bluetooth central apparatus, and may comprise: encrypting a piece of verification data according to a secret-key system to generate a first encrypted verification parameter; transmitting the first encrypted verification parameter to a Bluetooth peripheral apparatus; receiving a second encrypted verification parameter from the Bluetooth peripheral apparatus; decrypting the second encrypted verification parameter according to the secret-key system to obtain a piece of decrypted verification data; and verifying whether the Bluetooth peripheral apparatus is valid according to the piece of verification data and the piece of decrypted verification data.

According to the above description, in the embodiments of the disclosed invention, the Bluetooth central apparatus automatically encrypts the verification data according to a preset secret-key system to generate a first encrypted verification parameter, and transmits the first encrypted verification parameter to the Bluetooth peripheral apparatus. The Bluetooth peripheral apparatus also automatically decrypts the first encrypted verification parameter according to the same secret-key system to obtain a piece of decrypted verification data, and then encrypts the piece of decrypted verification data according to the same secret-key system to generate a second encrypted verification parameter, and returns the second encrypted verification parameter to the Bluetooth central apparatus. Next, the Bluetooth central apparatus further automatically decrypts the second encrypted verification parameter to obtain a piece of decrypted verification data, and verify the Bluetooth peripheral apparatus according to the piece of verification data and the piece of decrypted verification data. In other words, in the embodiments of the disclosed invention, the Bluetooth central apparatus and the Bluetooth peripheral apparatus automatically verify whether the Bluetooth peripheral apparatus is valid without the intervention of users and accordingly automatically determining whether to establish a secure Bluetooth connection between the Bluetooth central apparatus and the Bluetooth peripheral apparatus (if the Bluetooth connection has been established, they instead determine whether to terminate the Bluetooth connection therebetween). Therefore, the disclosed invention not only solves the aforementioned problems, but also is very suitable for being applied to the field of IoT, which involves a large number of apparatuses.

What described above are not intended to limit the disclosed invention, but only generally describe the technical problems that can be solved by the disclosed invention, the technical means that can be adopted by the disclosed invention, and the technical effects that can be achieved by the disclosed invention so that those of ordinary skill in the art can preliminarily understand the disclosed invention. The details of embodiments of the disclosed invention are described in the following paragraphs accompanying the appended drawings for people skilled in the art.

### BRIEF DESCRIPTION OF THE DRAWINGS

The attached drawings may assist in explaining various embodiments of the disclosed invention, in which:
**FIG. 1** illustrates a schematic view of a Bluetooth system according to some embodiments of the disclosed invention;
**FIG. 2** illustrates a schematic view of actions of the Bluetooth system in **FIG. 1** in an exemplary verification procedure;
**FIG. 3** illustrates a schematic view of how the Bluetooth system in **FIG. 1** performs verification via a key-exchange system in an exemplary Bluetooth-connection procedure;
**FIG. 4** illustrates a schematic view of how the Bluetooth system in **FIG. 1** performs verification via a key-exchange system in another exemplary Bluetooth-connection procedure;
**FIG. 5** illustrates a schematic view of how the Bluetooth system in **FIG. 1** performs verification via a public-and-private key-pair system in an exemplary Bluetooth-connection procedure;
**FIG. 6** illustrates a schematic view of how Bluetooth system in **FIG. 1** performs verification via a public-and-private key-pair system in another exemplary Bluetooth-connection procedure;
**FIG. 7** illustrates a verification method implemented on a Bluetooth peripheral apparatus according to some embodiments of the disclosed invention; and
**FIG. 8** illustrates a verification method implemented on a Bluetooth central apparatus according to some embodiments of the disclosed invention.

### DESCRIPTION OF THE PREFERRED EMBODIMENT

In the following description, the disclosed invention will be explained with reference to embodiments thereof, however, these embodiments are not intended to limit the disclosed invention to any operations, environment, applications, structures, processes or steps described in these embodiments. For ease of description, contents unrelated to the embodiments of the disclosed invention or contents that can be understood without special explanation will be omitted from depiction herein and in the attached drawings. Dimensions of elements and proportional relationships among individual elements in the attached drawings are only exemplary examples but not intended to limit the disclosed invention. Unless stated particularly, same (or similar) element symbols may correspond to same (or similar) elements in the following description. In accordance with the present disclosure, the number of each disclosed element is not limited unless otherwise specified.

Unless the context clearly indicates otherwise, "a" is not intended to limit the quantity, and should be interpreted as "one or more". Unless the context clearly indicates otherwise, "including" or "comprising" does not exclude other items than those listed. Unless the context clearly indicates otherwise, the term "and/or" means any one and all combinations of the listed items.

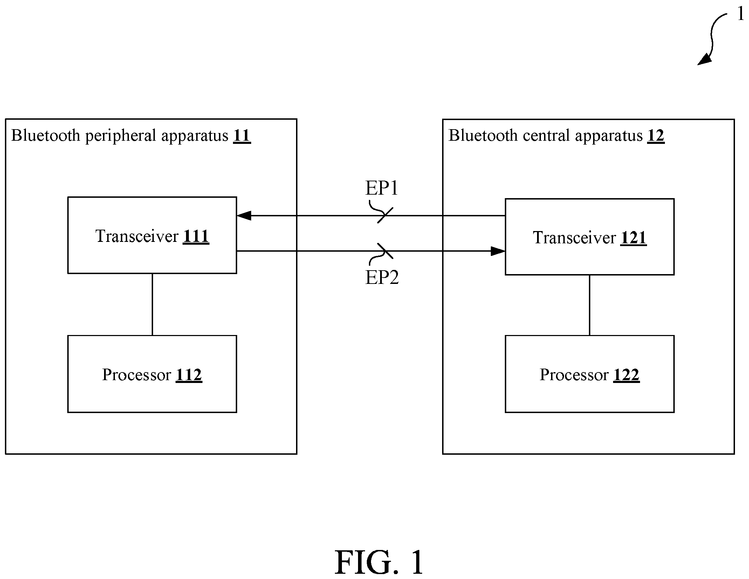

**FIG. 1** illustrates a schematic view of a Bluetooth system according to some embodiments of the disclosed invention. The content shown in **FIG. 1** is for exemplifying the embodiments of the disclosed invention, but not for limiting the scope of the claimed invention.

Referring to **FIG. 1**, a Bluetooth system **1** may basically comprise a Bluetooth peripheral apparatus **11** and a Bluetooth central apparatus **12.** The Bluetooth peripheral apparatus **11** may basically comprise a transceiver **111** and a processor **112**, and the transceiver **111** is electrically connected with the processor **112.** The Bluetooth central apparatus **12** may basically comprise a transceiver **121** and a processor **122,** and the transceiver **121** is electrically connected with the processor **122.** It should be noted that, the "electrical connection" between the above-mentioned elements may be direct (i.e., being connected with each other without through other functional elements) or indirect (i.e., being connected with each other through other functional elements). Each of the Bluetooth peripheral apparatus **11** and the Bluetooth central apparatus **12** may be one of various electronic apparatuses or machines with Bluetooth communication capabilities, such as mobile phones, tablet computers, laptop computers, Bluetooth headsets, Bluetooth speakers, Bluetooth bracelets/wristbands, smart Bluetooth appliances, or the like.

Each of the processor **112** and the processor **122** may be one of various microprocessors or microcontrollers capable of signal processing. The microprocessor or the microcontroller is a kind of programmable specific integrated circuit that is capable of operating, storing, outputting/inputting or the like. Moreover, the microprocessor or the microcontroller can receive and process various coded instructions, thereby performing various logical operations and arithmetical operations and outputting corresponding operation results. The processor **112** may be programmed to interpret various instructions so as to process data in the Bluetooth peripheral apparatus **11** and execute various operations or programs. The processor **122** may be programmed to interpret various instructions so as to process data in the Bluetooth central apparatus **12** and execute various operations or programs.

Each of the transceiver **111** and the transceiver **121** may be composed of a transmitter and a receiver, and may comprise, for example, communication elements such as an antenna, an amplifier, a modulator, a demodulator, a detector, an analog-to-digital converter, a digital-to-analog converter or the like, without being limited thereto. The Transceiver **111** may be used for the Bluetooth peripheral apparatus **11** to communicate and exchange data with external apparatuses (e.g., to receive a first encrypted verification parameter **EP1** from the Bluetooth central apparatus **12**)**,** while the transceiver **121** may be used for the Bluetooth central apparatus **12** to communicate and exchange data with external apparatuses (e.g., to receive a second encrypted verification parameter **EP2** from the Bluetooth peripheral apparatus **11**).

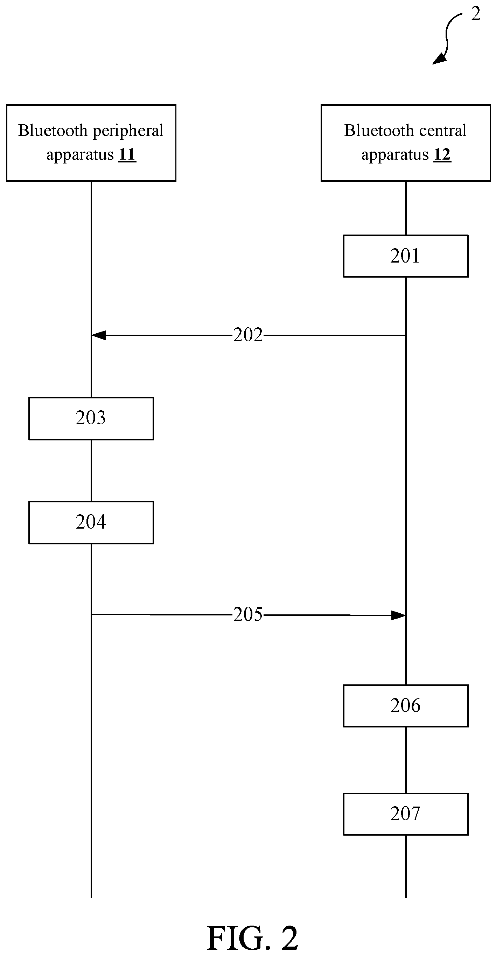

Next, referring to **FIG. 1** and **FIG. 2** which illustrates a schematic view of actions of the Bluetooth system **1** in an exemplary verification procedure **2.** The content shown in **FIG. 2** is for exemplifying the embodiments of the disclosed invention, but not for limiting the claimed invention.

As shown in **FIG. 2**, in order to verify whether the Bluetooth peripheral apparatus **11** is a valid apparatus, the processor **122** of the Bluetooth central apparatus **12** may first encrypt one or more pieces of verification data according to a secret-key system to generate a first encrypted verification parameter **EP1** (marked as an action **201**), and transmit the first encrypted verification parameter **EP1** to the Bluetooth peripheral apparatus **11** through the transceiver **121** (marked as an action **202**). In the present disclosure, the verification data may be, for example, specific data such as a word, a number, a date, a mathematical formula or the like, without being limited thereto. In the present disclosure, the secret-key system may be a key-exchange system, a public-and-private key-pair system, or other systems.

Upon receiving the first encrypted verification parameter **EP1,** the processor **112** of the Bluetooth peripheral apparatus **11** may decrypt the first encrypted verification parameter **EP1** according to the secret-key system to obtain decrypted verification data (marked as an action **203**). Then, the processor **112** of the Bluetooth peripheral apparatus **11** may further encrypt the decrypted verification data according to the secret-key system to generate a second encrypted verification parameter **EP2** (marked as an action **204**), and transmit the second encrypted verification parameter **EP2** to the Bluetooth central apparatus **12** through the transceiver **111** (marked as an action **205**). Upon receiving the second encrypted verification parameter **EP2** through the transceiver **121,** the processor **122** of the Bluetooth central apparatus **12** may decrypt the second encrypted verification parameter **EP2** according to the secret-key system to obtain decrypted verification data (marked as an action **206**), and verify whether the Bluetooth peripheral apparatus **11** is valid according to the verification data and the decrypted verification data (marked as an action **207**). Further speaking, if the verification data is the same as the decrypted verification data, the processor **122** of the Bluetooth central apparatus **12** will determine that the Bluetooth peripheral apparatus **11** is a valid apparatus for connection. On the contrary, if the verification data is different from the decrypted verification data, then the processor **122** of the Bluetooth central apparatus **12** will determine that the Bluetooth peripheral apparatus **11** is not a valid apparatus for connection.

In the case where a connection has not yet been established between the Bluetooth central apparatus **12** and the Bluetooth peripheral apparatus **11,** when the Bluetooth central apparatus **12** determines that the Bluetooth peripheral apparatus **11** is not the valid apparatus for connection, the Bluetooth central apparatus **12** will refuse to connect with the Bluetooth peripheral apparatus **11**. In the case where a connection has not yet been established between the Bluetooth central apparatus **12** and the Bluetooth peripheral apparatus **11**, when the Bluetooth central apparatus **12** determines that the Bluetooth peripheral apparatus **11** is the valid apparatus for connection, the Bluetooth central apparatus **12** will agree to connect with the Bluetooth peripheral apparatus **11**.

In the case where a connection has been established between the Bluetooth central apparatus **12** and the Bluetooth peripheral apparatus **11**, when the Bluetooth central apparatus **12** determines that the Bluetooth peripheral apparatus **11** is not the valid apparatus for connection, the Bluetooth central apparatus **12** will terminate the connection with the Bluetooth peripheral apparatus **11**. In the case where a connection has been established between the Bluetooth central apparatus **12** and the Bluetooth peripheral apparatus **11**, when the Bluetooth central apparatus **12** determines that the Bluetooth peripheral apparatus **11** is the valid apparatus for connection, the Bluetooth central apparatus **12** maintains the connection with the Bluetooth peripheral apparatus **11**.

In some embodiments, when the transceiver **121** of the Bluetooth central apparatus **12** has not received the second encrypted verification parameter **EP2** from the Bluetooth peripheral apparatus **11** within a preset time after transmitting the first encrypted verification parameter **EP1**, the processor **122** may infer that the Bluetooth peripheral apparatus **11** is not a valid apparatus for connection.

In some embodiments, before performing the action **201**, the processor **122** of the Bluetooth central apparatus **12** may first determine whether the target Bluetooth peripheral apparatus **11** appears in a blacklist. When the target Bluetooth peripheral apparatus **11** appears in the blacklist, the Bluetooth central apparatus **12** may not perform the action **201**, and instead directly refuse to connect with the target Bluetooth peripheral apparatus **11** or directly terminate the connection with the target Bluetooth peripheral apparatus **11**. In addition, the Bluetooth central apparatus **12** adds the information of the target Bluetooth peripheral apparatus **11** to the blacklist. The Bluetooth central apparatus **12** may comprise a storage/memory for storing the blacklist.

In some embodiments, the processor **112** of the Bluetooth peripheral apparatus **11** is further configured to transmit operation information to the Bluetooth central apparatus **12** through the transceiver **111**, so that the Bluetooth central apparatus **12** can determine whether the Bluetooth peripheral apparatus **11** is an allowed apparatus according to the operation information. The operation information may be information commonly known by both the Bluetooth central apparatus **12** and the Bluetooth peripheral apparatus **11**, such as a string, a number, a time, a Bluetooth address, or the like, without being limited thereto. For example, when the Bluetooth central apparatus **12** confirms that a Bluetooth peripheral apparatus **11** cannot transmit operation information, it determines that the Bluetooth peripheral apparatus **11** is not an allowed apparatus, and accordingly refuses to connect with the Bluetooth peripheral apparatus **11**, and stops subsequent operations. In some embodiments, as the Bluetooth central apparatus **12** determines that the Bluetooth peripheral apparatus **11** is not the allowed apparatus, the Bluetooth central apparatus **12** further adds the Bluetooth peripheral apparatus **11** into a blacklist.

In some embodiments, the Bluetooth central apparatus **12** may receive an identification of the Bluetooth peripheral apparatus **11** through the transceiver **121**, and then determine whether the identification appears in the blacklist. When the Bluetooth central apparatus **12** determines that the identification of the Bluetooth peripheral apparatus **11** appears in the blacklist, it will directly refuses to connect with the Bluetooth peripheral apparatus **11** and stops subsequent actions.

In some embodiments, it may alternatively be the Bluetooth peripheral apparatus **11** to verify whether the Bluetooth central apparatus **12** is valid. Specifically, the processor **112** of the Bluetooth peripheral apparatus **11** may encrypt a piece of verification data according to the secret-key system to generate a third encrypted verification parameter, and transmit the third encrypted verification parameter to the Bluetooth central apparatus **12** through the transceiver **111**. The processor **122** of the Bluetooth central apparatus **12** may decrypt the third encrypted verification parameter according to the secret-key system to obtain a piece of decrypted verification data, encrypt the decrypted verification data according to the secret-key system to generate a fourth encrypted verification parameter, and transmit the fourth encrypted verification parameter to the Bluetooth peripheral apparatus **11** through the transceiver **121**. Then, the processor **112** of the Bluetooth peripheral apparatus **11** may decrypt the fourth encrypted verification parameter according to the secret-key system to obtain the decrypted verification data, and verify whether the Bluetooth central apparatus **12** is valid according to the verification data and the decrypted verification data.

In some embodiments, the Bluetooth central apparatus **12** and the Bluetooth peripheral apparatus **11** may perform bidirectional verification simultaneously or sequentially according to the above-mentioned manner.

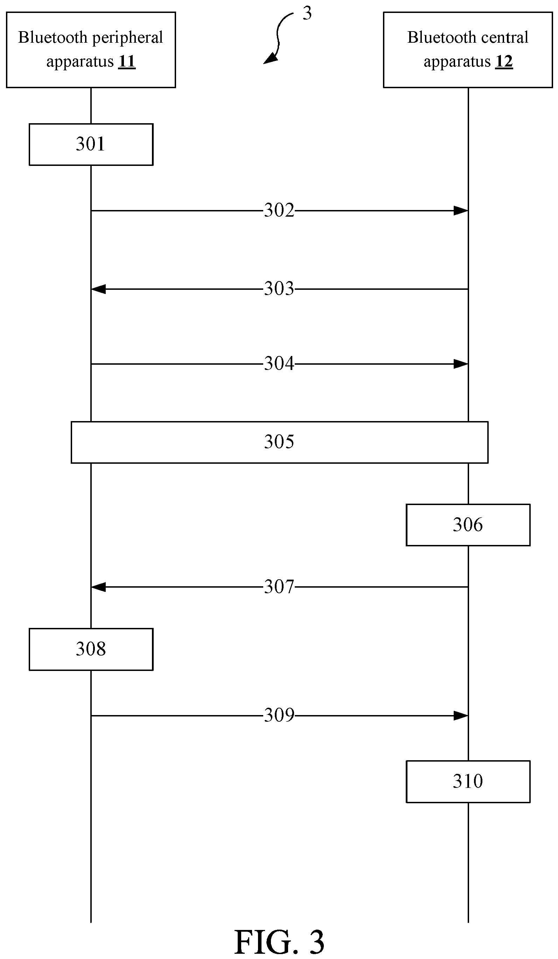

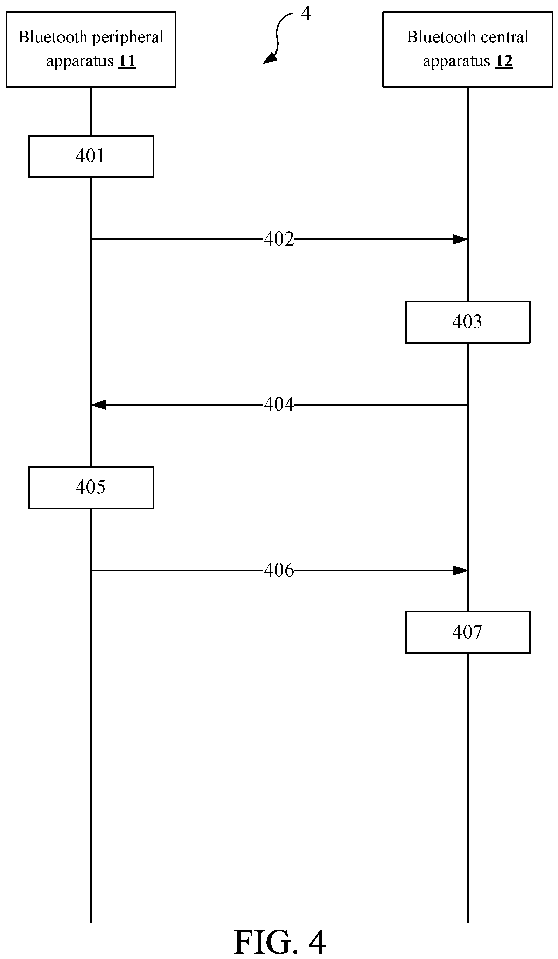

Next, how the Bluetooth system **1** performs verification via a key-exchanging system (secret-key system) in two different exemplary Bluetooth-connection procedures will be illustrated with reference to **FIG. 3** and **FIG. 4**. The contents shown in **FIG. 3** and **FIG. 4** are for exemplifying the embodiments of the disclosed invention, but not for limiting the scope of the claimed invention. The verification in **FIG. 3** is performed in the case where a connection has been established between the Bluetooth central apparatus **12** and the Bluetooth peripheral apparatus **11**, while the verification in **FIG. 4** is performed in the case where a connection has not yet been established between the Bluetooth central apparatus **12** and the Bluetooth peripheral apparatus **11**.

For example, in some embodiments, the secret-key system may be a key-exchange system based on one of the following: Diffie-Hellman key exchange (D-H key exchange), Elliptic Curve Diffie-Hellman key exchange (ECDH key exchange), without being limited thereto.

Taking Diffie-Hellman key exchange as an example, both the Bluetooth peripheral apparatus **11** and the Bluetooth central apparatus **12** may first generate respective public parameters "*N*" according to the formula of *"g^{x}mod p ",* wherein "x" is a random number generated by themselves, "*p*" is a prime number, "g" is a primitive root of *"p",* and "*p*" and "*g*" are known parameters agreed by both the Bluetooth peripheral apparatus **11** and the Bluetooth central apparatus **12**. Then, both the Bluetooth peripheral apparatus **11** and the Bluetooth central apparatus **12** may generate a common key through the formula of *"N^{x}mod p"* , wherein "*N*" is the public parameter of the mutual party.

More specifically, as shown in **FIG. 3**, the processor **112** of the Bluetooth peripheral apparatus **11** may calculate a public parameter "*A*" according to a random number "*a*" and the formula *"A = g^{a}mod p"* (marked as an action **301**). Then, the transceiver **111** of the Bluetooth peripheral apparatus **11** may transmit the public parameter "*A*" to the Bluetooth central apparatus **12** through an advertising packet (marked as an action **302**). When the Bluetooth central apparatus **12** receives the advertising packet, the Bluetooth central apparatus **12** may transmit a Bluetooth-connection request packet to the Bluetooth peripheral apparatus **11** through the transceiver **121** (marked as an action **303**). As a response to the Bluetooth-connection request packet of the Bluetooth central apparatus **12**, the Bluetooth peripheral apparatus **11** may transmit a Bluetooth-connection response packet to the Bluetooth central apparatus **12** through the transceiver **111** (marked as an action **304**). Then, the Bluetooth peripheral apparatus **11** establishes a Bluetooth connection with the Bluetooth central apparatus **12** (marked as an action **305**).

After the Bluetooth connection is established, the Bluetooth central apparatus **12** may perform an action **306**, which comprises: calculating a public parameter "*B*" according to a random number "*b*" and the formula " *B = g^{b}mod p*"; calculating a common key (i.e., *"g^{ab}mod p"*) shared by both the Bluetooth central apparatus **12** and the Bluetooth peripheral apparatus **11** according to the public parameter "*A*" of the Bluetooth peripheral apparatus **11** and the formula *"A^{b}modp";* and encrypting a piece of verification data by using the common key to generate a first encrypted verification parameter **EP1**. Then, the Bluetooth central apparatus **12** may transmit a first packet to the Bluetooth peripheral apparatus **11** through the transceiver **121** (marked as an action **307**), wherein the first packet carries the first encrypted verification parameter **EP1** and the public parameter "*B*".

After the action **307**, the Bluetooth peripheral apparatus **11** may perform an action **308**, which comprises: calculating the common key (i.e., *"g^{ab}mod p")* according to the public parameter "*B"* of the Bluetooth central apparatus **12** and the formula *"B^{a}mod p";* decrypting the first encrypted verification parameter **EP1** according to the common key to obtain a piece of decrypted verification data; and encrypting the decrypted verification data according to the common key to generate a second encrypted verification parameter **EP2.** Then, the Bluetooth peripheral apparatus **11** may transmit a second packet to the Bluetooth central apparatus **12** through the transceiver **111** (marked as an action **309**), wherein the second packet carries the second encrypted verification parameter **EP2.**

After the action **309**, the Bluetooth central apparatus **12** may perform an action **310**, which comprises: decrypting the second encrypted verification parameter **EP2** according to the common key to obtain the decrypted verification data; verifying whether the Bluetooth peripheral apparatus **11** is valid according to the verification data and the decrypted verification data; and performing the following processes according to verification results. When the verification data is the same as the decrypted verification data, the verification result will be that "the Bluetooth peripheral apparatus **11** is valid", and Bluetooth central apparatus **12** will continue to connect with the Bluetooth peripheral apparatus **11**. When the verification data is different from the decrypted verification data, the verification result will be that "the Bluetooth peripheral apparatus **11** is invalid", and the Bluetooth central apparatus **12** will terminate the connection with the Bluetooth peripheral apparatus **11.**

In some embodiments, the action **301** may alternatively be performed after the action 303 and before the action **304.**

Referring to **FIG. 4**, first, as in the action **301,** the processor **112** of the Bluetooth peripheral apparatus **11** may calculate a public parameter "*A*" according to a random number "*a*" and the formula *"A = g^{a}mod p"* (marked as an action **401**). Then, as in the action **302**, the transceiver **111** of the Bluetooth peripheral apparatus **11** may transmit the public parameter "A" to the Bluetooth central apparatus **12** through an advertising packet (marked as an action **402**). When the Bluetooth central apparatus **12** receives the advertising packet, the Bluetooth central apparatus **12** may perform an action **403**, which comprises: calculating a public parameter "B" according to a random number "*b*" and the formula "*B* = *g^{b}mod p";* calculating a common key (i.e., *"g^{ab}mod p")* shared by both the Bluetooth central apparatus **12** and the Bluetooth peripheral apparatus **11** according to the public parameter "*A*" of the Bluetooth peripheral apparatus **11** and the formula *"A^{b}mod p";* and encrypting a piece of verification data by using the common key to generate a first encrypted verification parameter **EP1.** Then, the transceiver **121** of the Bluetooth central apparatus **12** may transmit a Bluetooth-connection request packet to the Bluetooth peripheral apparatus **11**, wherein the Bluetooth-connection request packet carries the public parameter "*B*" and the first encrypted verification parameter **EP1** (marked as an action **404**).

After the action **404**, the Bluetooth peripheral apparatus **11** may perform an action **405**, which comprises: calculating the common key (i.e., *"g^{ab}mod p")* according to the public parameter "*B*" of the Bluetooth central apparatus **12** and the formula *"B^{a}mod p";* decrypting the first encrypted verification parameter **EP1** according to the common key to obtain a decrypted verification data; and encrypting the decrypted verification data according to the common key to generate a second encrypted verification parameter **EP2.** Then, the Bluetooth peripheral apparatus **11** may transmit a Bluetooth-connection response packet to the Bluetooth central apparatus **12** through the transceiver **111** (marked as an action **406**), wherein the Bluetooth-connection response packet carries the second encrypted verification parameter **EP2.**

After the Act **406**, similar to the Act **310**, the Bluetooth central apparatus **12** may perform an action **407**, which comprises: decrypting the second encrypted verification parameter **EP2** according to the common key to obtain the decrypted verification data; verifying whether the Bluetooth peripheral apparatus **11** is valid according to the verification data and the decrypted verification data; and performing corresponding processes according to verification results. The difference lies in that: when the verification result is that "the Bluetooth peripheral apparatus **11** is valid", the Bluetooth central apparatus **12** will establish a connection with the Bluetooth peripheral apparatus **11**; and when the verification result is that "the Bluetooth peripheral apparatus **11** is invalid", the Bluetooth central apparatus **12** will refuse to establish a connection with the Bluetooth peripheral apparatus **11.**

In some embodiments, in the action **308** as shown in **FIG. 3** or the action **405** as shown in **FIG. 4**, the processor **112** of the Bluetooth peripheral apparatus **11** may also encrypt a hash value of the decrypted verification data according to the common key to generate a second encrypted verification parameter **EP2.** Accordingly, in the action **310** as shown in **FIG. 3** or the action **407** as shown in **FIG. 4**, the processor **122** of the Bluetooth central apparatus **12** may decrypt the second encrypted verification parameter **EP2** according to the common key to obtain the hash value of the decrypted verification data; and verifying whether the Bluetooth peripheral apparatus **11** is valid according to a hash value of the verification data and the hash value of the decrypted verification data.

In some embodiments, the advertising packet transmitted by the Bluetooth peripheral apparatus **11** may also comprise operation information, so that the Bluetooth central apparatus **12** may first determine whether the Bluetooth peripheral apparatus **11** is an allowed apparatus according to the operation information before performing the action **303** as shown in **FIG. 3** or the action **403** as shown in **FIG. 4**. To be more specific, the Bluetooth central apparatus **12** may parse the advertising packet, and then confirm whether the advertising packet contains the operation information therein. When the Bluetooth central apparatus **12** confirms that the advertising packet does not contain the operation information therein, it will determine that the Bluetooth peripheral apparatus **11** is not an allowed apparatus, and then refuses to connect with the Bluetooth peripheral apparatus **11**, and stops subsequent actions. In some embodiments, when the Bluetooth central apparatus **12** determines that the Bluetooth peripheral apparatus **11** is not an allowed apparatus, the Bluetooth central apparatus **12** further adds the Bluetooth peripheral apparatus **11** into a blacklist.

In some embodiments, the Bluetooth central apparatus **12** may obtain an identification of the Bluetooth peripheral apparatus **11** by parsing the advertising packet, and then determine whether the identification appears in a blacklist. When the Bluetooth central apparatus **12** determines that the Bluetooth peripheral apparatus **11** appears in the blacklist, it will directly refuse to connect with the Bluetooth peripheral apparatus **11** and stop subsequent actions.

Although it is the Bluetooth central apparatus **12** that verifies whether the Bluetooth peripheral apparatus **11** is valid, as shown in **FIG. 3** and **FIG. 4**, in some embodiments, the Bluetooth peripheral apparatus **11** may also verify whether the Bluetooth central apparatus **12** is valid in a manner similar to the way of verification as described above. In addition, in some embodiments, the Bluetooth central apparatus **12** and the Bluetooth peripheral apparatus **11** may also perform bidirectional verification simultaneously or sequentially according to the above-mentioned manner.

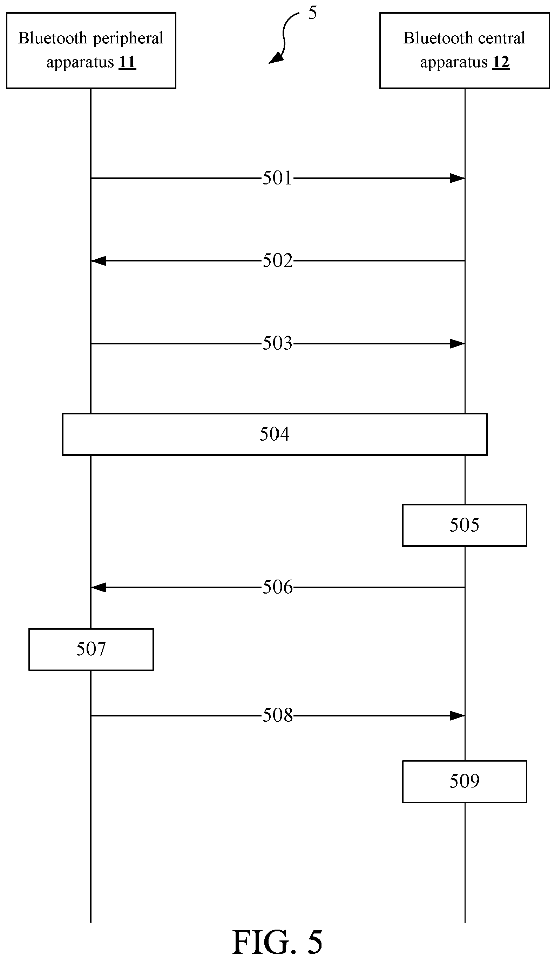

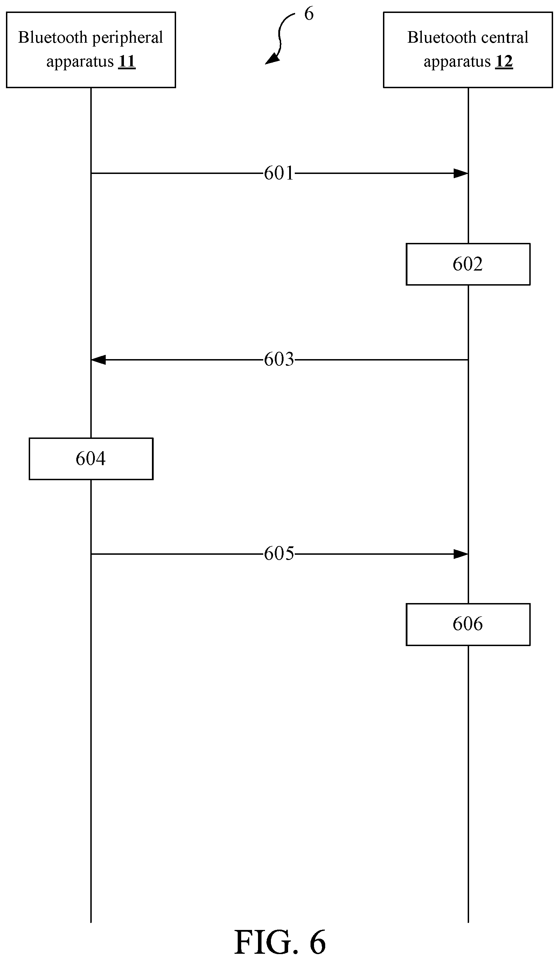

How the Bluetooth system **1** performs verification via a public-and-private key-pair system (the secret-key system) in two different exemplary Bluetooth-connection procedures will be described hereinafter with reference to **FIG. 5** and **FIG. 6****.** The contents shown in **FIG. 5** and **FIG. 6** are for exemplifying the embodiments of the disclosed invention, but not for limiting the scope of the claimed invention. The verification in **FIG. 5** is completed in the case where a connection between the Bluetooth central apparatus **12** and the Bluetooth peripheral apparatus **11** has been established, while the verification in **FIG. 6** is completed in the case where a connection between the Bluetooth central apparatus **12** and the Bluetooth peripheral apparatus **11** has not been established.

For example, in some embodiments, the secret-key system may be a public-and-private key-pair system based on one of the following: Rivest-Shamir-Adleman (RSA) encryption algorithm, elliptic curve cryptography (ECC), hyper-elliptic curve cryptography (HECC), but it is not limited thereto. Under the public-and-private key-pair system, the Bluetooth peripheral apparatus 11 has a key pair (hereinafter referred to as a first public key and a first private key), while the Bluetooth central apparatus **12** has another key pair (hereinafter referred to as a second public key and a second private key).

As shown in **FIG. 5**, at first, the transceiver **111** of the Bluetooth peripheral apparatus **11** may transmit the first public key to the Bluetooth central apparatus **12** through an advertising packet (marked as an action **501**). When the Bluetooth central apparatus **12** receives the advertising packet from the Bluetooth peripheral apparatus **11**, the Bluetooth central apparatus **12** may transmit a Bluetooth-connection request packet to the Bluetooth peripheral apparatus **11** through the transceiver **121** (marked as an action **502**). As a response to the Bluetooth-connection request packet of the Bluetooth central apparatus **12**, the Bluetooth peripheral apparatus **11** may transmit a Bluetooth-connection response packet to the Bluetooth central apparatus **12** through the transceiver **111** (marked as an action **503**). Then, the Bluetooth peripheral apparatus **11** establishes a Bluetooth connection with the Bluetooth central apparatus **12** (marked as an action **504**).

After the Bluetooth connection is established, the processor **122** of the Bluetooth central apparatus **12** may encrypt a piece of verification data according to the first public key to generate a first encrypted verification parameter **EP1** (marked as an action **505**). Then, the transceiver **121** of the Bluetooth central apparatus **12** may transmit a first packet to the Bluetooth peripheral apparatus **11** (marked as an action **506**), wherein the first packet carries the first encrypted verification parameter **EP1** and the second public key.

After the action **506**, the processor **112** of the Bluetooth peripheral apparatus **11** may perform an action **507**, which comprises: decrypting the first encrypted verification parameter **EP1** according to the first private key to obtain a decrypted verification data; and encrypting the decrypted verification data according to the second public key to generate a second encrypted verification parameter **EP2.** Then, the transceiver **111** of the Bluetooth peripheral apparatus **11** may transmit a second packet to the Bluetooth central apparatus **12** (marked as an action **508**), wherein the second packet carries the second encrypted verification parameter **EP2.**

After the action **508**, the Bluetooth central apparatus **12** may perform an action **509**, which comprises: decrypting the second encrypted verification parameter **EP2** according to the second private key to obtain the decrypted verification data; verifying whether the Bluetooth peripheral apparatus **11** is valid according to the verification data and the decrypted verification data; and performing the following processes according to verification results. When the verification data is the same as the decrypted verification data, the verification result will be that "the Bluetooth peripheral apparatus **11** is valid", and the Bluetooth central apparatus **12** will continue to connect with the Bluetooth peripheral apparatus **11.** When the verification data is different from the decrypted verification data, the verification result will be that "the Bluetooth peripheral apparatus **11** is invalid", and the Bluetooth central apparatus **12** will terminate the connection with the Bluetooth peripheral apparatus **11.**

In some embodiments, the Act **501** may alternatively be performed after the action **502** and before the action **503.**

Referring to **FIG. 6**, at first, as in the action **501**, the transceiver **111** of the Bluetooth peripheral apparatus **11** may transmit the first public key to the Bluetooth central apparatus **12** through an advertising packet (marked as an action **601**). When the Bluetooth central apparatus **12** receives the advertising packet from the Bluetooth peripheral apparatus **11**, the Bluetooth central apparatus **12** may encrypt a piece of verification data according to the first public key to generate a first encrypted verification parameter **EP1** (marked as an action **602**). Then, the transceiver **121** of the Bluetooth central apparatus **12** may transmit a Bluetooth-connection request packet to the Bluetooth peripheral apparatus **11**, wherein the Bluetooth-connection request packet carries the first encrypted verification parameter **EP1** and the second public key (marked as an action **603**).

After the action **603**, the processor **112** of the Bluetooth peripheral apparatus **11** may perform an action **604**, which comprises: decrypting the first encrypted verification parameter **EP1** according to the first private key to obtain a decrypted verification data; and encrypting the decrypted verification data according to the second public key to generate a second encrypted verification parameter **EP2.** Then, the Bluetooth peripheral apparatus **11** may transmit a Bluetooth-connection response packet to the Bluetooth central apparatus **12** through the transceiver **111** (marked as an action **605**), wherein the Bluetooth-connection response packet carries the second encrypted verification parameter **EP2.**

After the action **605**, similar to the action **509**, the Bluetooth central apparatus **12** may perform an action **606**, which comprises: decrypting the second encrypted verification parameter **EP2** according to the second private key to obtain the decrypted verification data; verifying whether the Bluetooth peripheral apparatus **11** is valid according to the verification data and the decrypted verification data; and performing corresponding processes according to verification results. The difference lies in that: when the verification result is that "the Bluetooth peripheral apparatus **11** is valid", the Bluetooth central apparatus **12** will establish a connection with the Bluetooth peripheral apparatus **11**; and when the verification result is that "the Bluetooth peripheral apparatus **11** is invalid", the Bluetooth central apparatus **12** will refuse to establish a connection with the Bluetooth peripheral apparatus **11.**

In some embodiments, in the action **507** as shown in **FIG. 5** or the action **604** as shown in **FIG. 6**, the processor **112** of the Bluetooth peripheral apparatus **11** may also encrypt a hash value of the decrypted verification data according to the second public key to generate a second encrypted verification parameter **EP2.** Accordingly, in the action **509** as shown in **FIG. 5** or the action **606** as shown in **FIG. 6**, the processor **122** of the Bluetooth central apparatus **12** may decrypt the second encrypted verification parameter **EP2** according to the second private key to obtain the hash value of the decrypted verification data; and verifying whether the Bluetooth peripheral apparatus **11** is valid according to a hash value of the verification data and the hash value of the decrypted verification data.

In some embodiments, the advertising packet transmitted by the Bluetooth peripheral apparatus **11** may further comprise operation information, so that the Bluetooth central apparatus **12** may first determine whether the Bluetooth peripheral apparatus **11** is an allowed apparatus according to the operation information before performing the action **502** as shown in **FIG. 5** or the action **602** as shown in **FIG. 6****.** To be more specific, the Bluetooth central apparatus **12** may parse the advertising packet, and then confirm whether the advertising packet contains the operation information therein. When the Bluetooth central apparatus **12** confirms that the advertising packet does not contain the operation information therein, it determines that the Bluetooth peripheral apparatus **11** is not an allowed apparatus, and then refuses to connect with the Bluetooth peripheral apparatus **11**, and stops subsequent actions. In some embodiments, when the Bluetooth central apparatus **12** determines that the Bluetooth peripheral apparatus **11** is not an allowed apparatus, the Bluetooth central apparatus **12** further adds the Bluetooth peripheral apparatus **11** into a blacklist.

In some embodiments, the Bluetooth central apparatus **12** may obtain an identification of the Bluetooth peripheral apparatus **11** by parsing the advertising packet, and then determine whether the identification appears in a blacklist. When the Bluetooth central apparatus **12** determines that the Bluetooth peripheral apparatus **11** appears in the blacklist, it directly refuses to connect with the Bluetooth peripheral apparatus **11**, and stops subsequent actions.

Although it is the Bluetooth central apparatus **12** that verifies whether the Bluetooth peripheral apparatus **11** is valid, as shown in **FIG. 5** and **FIG. 6****,** in some embodiments, the Bluetooth peripheral apparatus **11** may also verify whether the Bluetooth central apparatus **12** is valid in a manner similar to the way of verification described above. In addition, in some embodiments, the Bluetooth central apparatus **12** and the Bluetooth peripheral apparatus **11** may also perform bidirectional verification simultaneously or sequentially according to the above-mentioned manner.

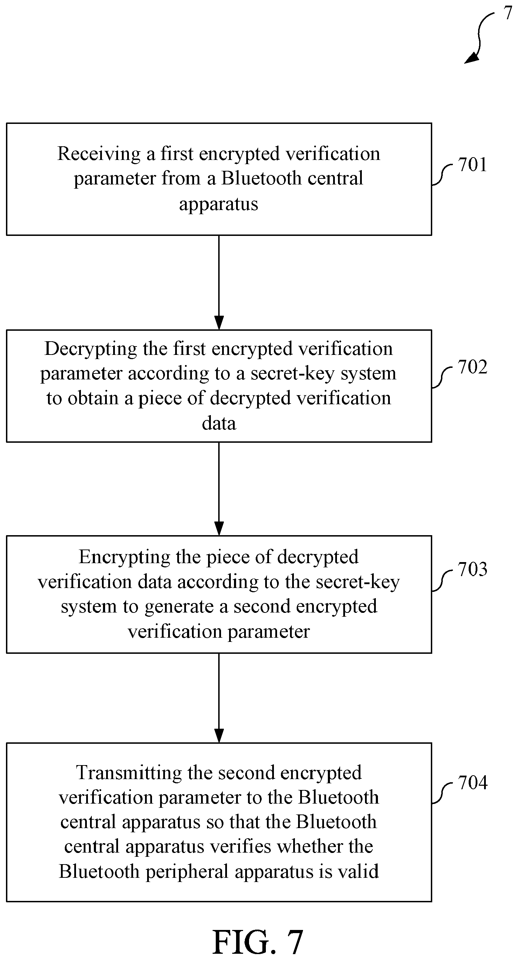

**FIG. 7** illustrates a verification method implemented on a Bluetooth peripheral apparatus according to some embodiments of the disclosed invention. The contents shown in **FIG. 7** are for exemplifying the embodiments of the disclosed invention, but not for limiting the scope of the claimed invention.

Referring to **FIG. 7**, a verification method **7** implemented on a Bluetooth peripheral apparatus may comprise the following steps:
receiving a first encrypted verification parameter from a Bluetooth central apparatus (marked as a step **701**);
decrypting the first encrypted verification parameter according to a secret-key system to obtain a piece of decrypted verification data (marked as a step **702**);
encrypting the piece of decrypted verification data according to the secret-key system to generate a second encrypted verification parameter (marked as a step **703**); and
transmitting the second encrypted verification parameter to the Bluetooth central apparatus so that the Bluetooth central apparatus verifies whether the Bluetooth peripheral apparatus is valid (marked as a step **704**).

In some embodiments of the verification method 7, the secret-key system is a key-exchange system or a public-and-private key-pair system.

In some embodiments of the verification method 7, the Bluetooth peripheral apparatus receives the first encrypted verification parameter via a Bluetooth-connection request packet transmitted by the Bluetooth central apparatus to the Bluetooth peripheral apparatus, and the Bluetooth peripheral apparatus transmits the second encrypted verification parameter via a Bluetooth-connection response packet transmitted by the Bluetooth peripheral apparatus to the Bluetooth central apparatus.

In some embodiments of the verification method 7, the Bluetooth peripheral apparatus receives the first encrypted verification parameter via a first packet transmitted by the Bluetooth central apparatus to the Bluetooth peripheral apparatus after the Bluetooth central apparatus has been connected with the Bluetooth peripheral apparatus, and the Bluetooth peripheral apparatus transmits the second encrypted verification parameter via a second packet transmitted by the Bluetooth peripheral apparatus to the Bluetooth central apparatus after the Bluetooth central apparatus has been connected with the Bluetooth peripheral apparatus.

In some embodiments of the verification method 7, in addition to the steps **701** to **704**, the verification method 7 may further comprise the following step: transmitting operation information to the Bluetooth central apparatus before the first encrypted verification parameter is received so that the Bluetooth central apparatus determines whether the Bluetooth peripheral apparatus is an allowed apparatus according to the operation information.

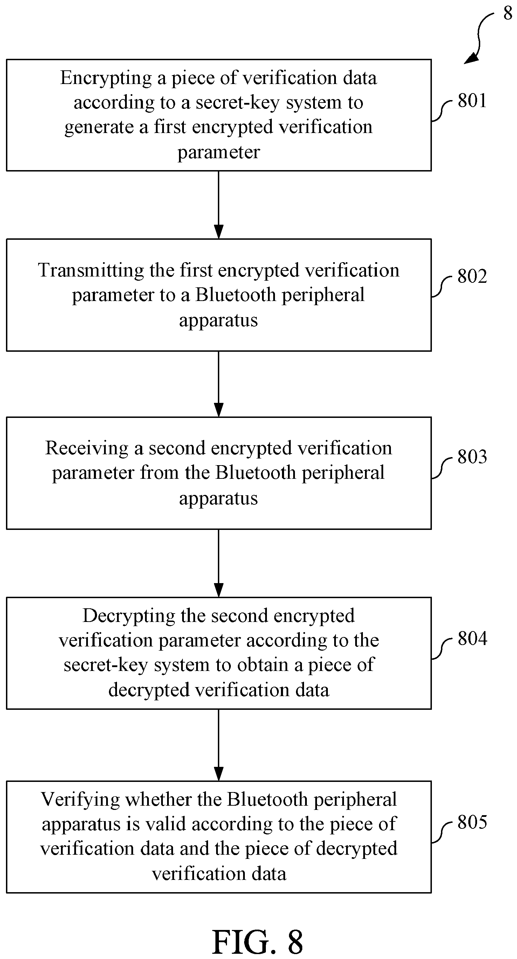

**FIG. 8** illustrates a verification method implemented on a Bluetooth central apparatus according to some embodiments of the disclosed invention. The contents shown in **FIG. 8** are for exemplifying the embodiments of the disclosed invention, but not for limiting the scope of the claimed invention.

Referring to **FIG. 8**, a verification method **8** implemented on a Bluetooth central apparatus may comprise the following steps:
encrypting a piece of verification data according to a secret-key system to generate a first encrypted verification parameter (marked as a step **801**);
transmitting the first encrypted verification parameter to a Bluetooth peripheral apparatus (marked as a step **802**);
receiving a second encrypted verification parameter from the Bluetooth peripheral apparatus (marked as a step **803**);
decrypting the second encrypted verification parameter according to the secret-key system to obtain a piece of decrypted verification data (marked as a step **804**); and
verifying whether the Bluetooth peripheral apparatus is valid according to the piece of verification data and the piece of decrypted verification data (marked as a step **805**).

In some embodiments of the verification method **8**, the secret-key system is a key-exchange system or a public-and-private key-pair system.

In some embodiments of the verification method **8**, the Bluetooth central apparatus transmits the first encrypted verification parameter via a Bluetooth-connection request packet transmitted by the Bluetooth central apparatus to the Bluetooth peripheral apparatus, and the Bluetooth central apparatus receives the second encrypted verification parameter via a Bluetooth-connection response packet transmitted by the Bluetooth peripheral apparatus to the Bluetooth central apparatus.

In some embodiments of the verification method **8**, the Bluetooth central apparatus transmits the first encrypted verification parameter via a first packet transmitted by the Bluetooth central apparatus to the Bluetooth peripheral apparatus after the Bluetooth central apparatus has been connected with the Bluetooth peripheral apparatus, and the Bluetooth central apparatus receives the second encrypted verification parameter via a second packet transmitted by the Bluetooth peripheral apparatus to the Bluetooth central apparatus after the Bluetooth central apparatus has been connected with the Bluetooth peripheral apparatus.

In some embodiments of the verification method **8**, in addition to the steps **801** to 805, the verification method further comprises the following steps:
receiving operation information from the Bluetooth peripheral apparatus before transmitting the first encrypted verification parameter; and
determining whether the Bluetooth peripheral apparatus is an allowed apparatus according to the operation information.

Each embodiment of the verification method 7 or the verification method **8** essentially corresponds to a certain embodiment of the Bluetooth system **1.** Therefore, even though not all embodiments of the verification method 7 or the verification method **8** are described in detail above, those of ordinary skill in the art can directly understand the embodiments of the verification method 7 and the verification method **8** that are not described in detail according to the above description of the Bluetooth system **1.**

The above disclosure provides the detailed technical contents and inventive features thereof for some embodiments of the present invention.

## Claims

1. A Bluetooth peripheral apparatus, comprising:
a transceiver, being configured to receive a first encrypted verification parameter from a Bluetooth central apparatus; and
a processor electrically connected with the transceiver, being configured to:
decrypt the first encrypted verification parameter according to a secret-key system to obtain a piece of decrypted verification data; and
encrypt the piece of decrypted verification data according to the secret-key system to generate a second encrypted verification parameter;
wherein the transceiver is further configured to transmit the second encrypted verification parameter to the Bluetooth central apparatus so that the Bluetooth central apparatus verifies whether the Bluetooth peripheral apparatus is valid.

2. The Bluetooth peripheral apparatus of Claim 1, wherein the secret-key system is a key-exchange system or a public-and-private key-pair system.

3. The Bluetooth peripheral apparatus of Claim 1 or 2, wherein the transceiver is further configured to receive the first encrypted verification parameter via a Bluetooth-connection request packet which is transmitted by the Bluetooth central apparatus to the Bluetooth peripheral apparatus, and the transceiver is further configured to transmit the second encrypted verification parameter via a Bluetooth-connection response packet which is transmitted by the Bluetooth peripheral apparatus to the Bluetooth central apparatus.

4. The Bluetooth peripheral apparatus of Claim 1 or 2, wherein the transceiver is further configured to receive the first encrypted verification parameter via a first packet which is transmitted by the Bluetooth central apparatus to the Bluetooth peripheral apparatus after the Bluetooth central apparatus has been connected with the Bluetooth peripheral apparatus, and the transceiver is further configured to transmit the second encrypted verification parameter via a second packet which is transmitted by the Bluetooth peripheral apparatus to the Bluetooth central apparatus after the Bluetooth central apparatus has been connected with the Bluetooth peripheral apparatus.

5. The Bluetooth peripheral apparatus of any of Claims 1 to 4, wherein the processor is further configured to transmit operation information to the Bluetooth central apparatus via the transceiver before the first encrypted verification parameter is received by the transceiver so that the Bluetooth central apparatus determines whether the Bluetooth peripheral apparatus is an allowed apparatus according to the operation information.

6. A Bluetooth central apparatus, comprising:
a processor, being configured to encrypt a piece of verification data according to a secret-key system to generate a first encrypted verification parameter; and
a transceiver electrically connected with the processor, being configured to:
transmit the first encrypted verification parameter to a Bluetooth peripheral apparatus; and
receive a second encrypted verification parameter from the Bluetooth peripheral apparatus;
wherein the processor is further configured to:
decrypt the second encrypted verification parameter according to the secret-key system to obtain a piece of decrypted verification data; and
verify whether the Bluetooth peripheral apparatus is valid according to the piece of verification data and the piece of decrypted verification data.

7. The Bluetooth central apparatus of Claim 6, wherein the secret-key system is a key exchange system or a public-and-private key-pair system.

8. The Bluetooth central apparatus of Claim 6 or 7, wherein the transceiver is further configured to transmit the first encrypted verification parameter via a Bluetooth-connection request packet which is transmitted by the Bluetooth central apparatus to the Bluetooth peripheral apparatus, and the transceiver is further configured to receive the second encrypted verification parameter via a Bluetooth-connection response packet which is transmitted by the Bluetooth peripheral apparatus to the Bluetooth central apparatus.

9. The Bluetooth central apparatus of Claim 6 or 7, wherein the transceiver is further configured to transmit the first encrypted verification parameter via a first packet which is transmitted by the Bluetooth central apparatus to the Bluetooth peripheral apparatus after the Bluetooth central apparatus has been connected with the Bluetooth peripheral apparatus, and the transceiver is further configured to receive the second encrypted verification parameter via a second packet which is transmitted by the Bluetooth peripheral apparatus to the Bluetooth central apparatus after the Bluetooth central apparatus has been connected with the Bluetooth peripheral apparatus.

10. The Bluetooth central apparatus of any of Claims 6 to 9, wherein the transceiver is further configured to receive operation information from the Bluetooth peripheral apparatus before transmitting the first encrypted verification parameter and the processor is further configured to determine whether the Bluetooth peripheral apparatus is an allowed apparatus according to the operation information.

11. A verification method implemented on a Bluetooth peripheral apparatus, comprising:
receiving a first encrypted verification parameter from a Bluetooth central apparatus;
decrypting the first encrypted verification parameter according to a secret-key system to obtain a piece of decrypted verification data;
encrypting the piece of decrypted verification data according to the secret-key system to generate a second encrypted verification parameter; and
transmitting the second encrypted verification parameter to the Bluetooth central apparatus so that the Bluetooth central apparatus verifies whether the Bluetooth peripheral apparatus is valid.

12. The verification method of Claim 11, wherein the secret-key system is a key-exchange system or a public-and-private key-pair system.

13. The verification method of Claim 11 or 12, wherein:
the Bluetooth peripheral apparatus receives the first encrypted verification parameter via a Bluetooth-connection request packet which is transmitted by the Bluetooth central apparatus to the Bluetooth peripheral apparatus; and
the Bluetooth peripheral apparatus transmits the second encrypted verification parameter via a Bluetooth-connection response packet which is transmitted by the Bluetooth peripheral apparatus to the Bluetooth central apparatus.

14. The verification method of Claim 11 or 12, wherein:
the Bluetooth peripheral apparatus receives the first encrypted verification parameter via a first packet which is transmitted by the Bluetooth central apparatus to the Bluetooth peripheral apparatus after the Bluetooth central apparatus has been connected with the Bluetooth peripheral apparatus; and
the Bluetooth peripheral apparatus transmits the second encrypted verification parameter via a second packet which is transmitted by the Bluetooth peripheral apparatus to the Bluetooth central apparatus after the Bluetooth central apparatus has been connected with the Bluetooth peripheral apparatus.

15. The verification method of any of Claims 11 to 14, further comprising:
transmitting operation information to the Bluetooth central apparatus before the first encrypted verification parameter is received so that the Bluetooth central apparatus determines whether the Bluetooth peripheral apparatus is an allowed apparatus according to the operation information.

16. A verification method implemented on a Bluetooth central apparatus, comprising:
encrypting a piece of verification data according to a secret-key system to generate a first encrypted verification parameter;
transmitting the first encrypted verification parameter to a Bluetooth peripheral apparatus;
receiving a second encrypted verification parameter from the Bluetooth peripheral apparatus;
decrypting the second encrypted verification parameter according to the secret-key system to obtain a piece of decrypted verification data; and
verifying whether the Bluetooth peripheral apparatus is valid according to the piece of verification data and the piece of decrypted verification data.

17. The verification method of Claim 16, wherein the secret-key system is a key-exchange system or a public-and-private key-pair system.

18. The verification method of Claim 16 or 17, wherein:
the Bluetooth central apparatus transmits the first encrypted verification parameter via a Bluetooth-connection request packet which is transmitted by the Bluetooth central apparatus to the Bluetooth peripheral apparatus; and
the Bluetooth central apparatus receives the second encrypted verification parameter via a Bluetooth-connection response packet which is transmitted by the Bluetooth peripheral apparatus to the Bluetooth central apparatus.

19. The verification method of Claim 16 or 17, wherein:
the Bluetooth central apparatus transmits the first encrypted verification parameter via a first packet which is transmitted by the Bluetooth central apparatus to the Bluetooth peripheral apparatus after the Bluetooth central apparatus has been connected with the Bluetooth peripheral apparatus; and
the Bluetooth central apparatus receives the second encrypted verification parameter via a second packet which is transmitted by the Bluetooth peripheral apparatus to the Bluetooth central apparatus after the Bluetooth central apparatus has been connected with the Bluetooth peripheral apparatus.

20. The verification method of any of Claims 16 to 19, further comprising:
receiving operation information from the Bluetooth peripheral apparatus before transmitting the first encrypted verification parameter; and
determining whether the Bluetooth peripheral apparatus is an allowed apparatus according to the operation information.
